# EUROPÄISCHE PATENTSCHRIFT

(11) **EP 0 561 118 B1**
(45) Veröffentlichungstag und Bekanntmachung des Hinweises auf die Patenterteilung: **17.09.1997**
(21) Anmeldenummer: 93100995.5
(22) Anmeldetag: 22.01.1993
(51) Int. Cl.: A23P 1/16, A23G 9/20, A23G 3/02, A23L 3/36, A23G 9/22, A23G 9/28, A23G 9/16

(54) **Einrichtung zum Kühlen von Fluiden und essbaren Schäumen**
Cooling apparatus for fluid and eatable foams
Dispositif de refroidissement pour mousses fluides et comestibles

(30) Priorität: 28.01.1992 DE 4202231
(43) Veröffentlichungstag der Anmeldung: 22.09.1993
(73) Patentinhaber: Milchhof-Eiskrem GmbH & Co. KG, D-40822 Mettmann (DE); HMF KRAMPE & CO. GMBH, D-45527 Hattingen (DE); Tetra Laval Food Schröder GmbH & Co. KG, 23564 Lübeck (DE)
(72) Erfinder: Windhab, Erich, Dr.-Ing., CH-8706 Meilen (DE); Fels, Ulrich, Dipl.-Kfm., W-4154 Tönisvorst (DE); Hoffmann, Ralf, W-4320 Hattingen 13 (DE); von Holdt, Peter, Dipl.-Ing., W-2401 Gross Grönau (DE); Hahn, Lutz, W-2401 Gross Grönau (DE)
(74) Vertreter: Beyer, Rudi

## Beschreibung

Die Erfindung betrifft eine Einrichtung zum Kühlen von eßbaren Schäumen, bei der einer Aufschlagvorrichtung unmittelbar ein Kühl- und Gefriergerät zum Vorgefrieren des Schaumes und dem Kühl- und Gefriergerät unmittelbar eine als kombinierte Tiefgefrier- und Transportvorrichtung ausgebildete motorisch antreibbare Extrudervorrichtung nachgeschaltet ist, in der der vorgefrorene Schaum auf Lagertemperatur herunterkühlbar ist und die Aufschlagvorrichtung, das Kühl- oder Gefriergerät und die Extrudervorrichtung durch Rohrleitungen miteinander verbunden sind.

### Stand der Technik

### Grundsätzliche Überlegungen:

In weiten Bereichen der Lebensmitteltechnologie werden zum Herstellen von Lebensmitteln bzw. von Genußmitteln Schaume hergestellt. Diese Schäume haben zum einen den Vorteil, daß sie den Genußwert des jeweiligen Produktes erhöhen, zum anderen wird durch das Einschlagen von Luft eine Erhöhung des Volumens vorgenommen.

Zwei klassische Vertreter dieser Lebensmittelschaume sind Schlagsahne und Eiskrem. Bei beiden Produkten wird durch das Einschlagen von Luft das Volumen auf etwa das Doppelte erhöht. Die Feinverteilung der Luftblasen ist sowohl bei Eiskrem als auch bei Schlagsahne ein wesentliches Qualitätskriterium. Bei beiden obengenannten Produkten ist erst eine verzehrsgerechte Form durch dieses Einschlagen von Luft möglich.
- Bei Schlagsahne verbietet der hohe Fettgehalt weitgehend den Genuß in der ursprünglich flüssigen Form.
- Bei Eiskrem bewirkt das Einschlagen von Luft eine cremige Konsistenz der Eiskrem, da man ohne Lufteinschlag einen hartgefrorenen Block erhält.

Die Technologien zum kontinuierlichen Aufschlagen (Einbringung von Luft) von Schlagsahne und Eiskrem sind weltweit bekannt. Zwar unterscheiden sich die Technologien bei Schlagsahne und Eiskrem wesentlich voneinander, haben jedoch das gleiche mechanische Grundprinzip.

Die Verbreitung von tiefgekühlten Produkten und somit auch deren Absatz hat sich in den letzten Jahren mehr als verdoppelt. Nachdem anfänglich die Tiefkühlung nur zur Frischhaltung von Gemüse eingesetzt wurde, wird heute die gesamte Lebensmittelpalette bereits als Tiefkühlware für die Bereiche der Frischwaren angeboten. Von der Tiefkühlung von Gemüse geht der Verbreitungsweg der Tiefkühlkost heute über Fertiggerichte bis hin zu Konditortorten. In diesem Tiefkühlkostbereich nimmt Eiskrem eine wesentliche Stellung ein, wobei für Eiskrem ausschließlich dieser Vermarktungsweg über eine geschlossene Tiefkühlkette möglich ist. Seit ungefähr 15 Jahren versucht die Industrie, Konditortorten auf Schlagsahnebasis als Tiefkühlprodukte zu vermarkten. Stetig steigende Verkaufszahlen auf diesem Sektor belegen die großen Marktchancen in diesem Marktsegment. Die Technologie der Herstellung solcher Tiefkühltorten ist, abgesehen von dem Einsatz von automatischen, kontinuierlichen Aufschlagmaschinen, weitgehend rückständig.

Die Technologie der Eiskremherstellung hat seit der Inbetriebnahme von kontinuierlichen Kühl- oder Gefriergeräten (Freezer) keine gravierenden, technischen Änderungen mehr erfahren. Sieht man von technischen Änderungen, die die Steuerung der Eiskrem-Kühl- oder Gefriergeräte betreffen, ab, so wird hier nach dem gleichen Prinzip noch wie vor 30 Jahren gearbeitet.

### Die heute übliche Arbeitsweise zum Herstellen von tiefgekühlten Torten

Der mit Zucker versetzten Schlagsahne wird ein geeignetes Geliermittel hinzugefügt. Danach wird diese Schlagsahne pasteurisiert und in Reifetanks für etwa 24 Stunden bei +5° C gereift. Mittels einer Förderpumpe wird die Sahne der kontinuierlich arbeitenden Aufschlagmaschine zugeführt. Gleichzeitig wird diese Aufschlagmaschine mit Druckluft versorgt. Beide Medien werden mit einem Rotor-Stator-Prinzip miteinander vermengt, wobei die Schlagsahne Luft aufnimmt.

Beim Schlagen von Sahne entsteht ein 3-Phasen-System, nämlich die Luft-, Fett- und Serumphase.

In diese Emulsion werden Luftblasen eingeschlagen (verschäumt). Hierbei wird ein Teil der Fettkügelchen zerstört. Das Fett liegt bei tiefen Temperaturen teilweise in fester, auskristallisierter Form vor, wobei aber ein kleiner Teil des Fettes noch in flüssiger Form in Fettkügelchen eingeschlossen ist. Durch die mechanische Einwirkung des Rotor-Stator-Systems kommt es zu einem Zerstören dieser Fettkügelchen. Dabei tritt ein Teil des freien Fettes aus. Die "angeschlagenen" und die intakten Fettkügelchen lagern sich dann an die Grenzfläche Luft/Serum an. Dabei ragen Teile von Fettkügelchen aus den monomolekularen Schichten kristallinen Fettes aufgrund der hydrophoben Eigenschaften in die Innenseite der Luftblasen hinein. Freies, flüssiges Fett dient dazu, die erstarrten Fettkügelchen miteinander zu verbinden (Kittsubstanz). In der Serumphase nimmt die Anzahl der intakten Fettkügelchen während des Schlagens (Verschäumens) ab. Die Proteine verbleiben in der Serumphase. Durch diesen Vorgang entsteht ein stabiler Schaum (Schlagsahne). Dieser Schaum wird dann mittels Füllapparaturen schichtweise in Tortenformen eingegeben. Dabei hat dieser Schaum eine Konsistenz, die eine Abfüllung mittels Volumendoseuren noch zuläßt. Die in der Sahne vorhandenen Geliermittel werden erst nach Ablauf einiger Minuten fest, d. h., sie bilden ein Gerüst innerhalb der Schaumstruktur, wobei die Fettkügelchen und die Luftblasen fest justiert werden durch diese gerüstbildenden Geliermittel. Gleichzeitig wird das Wasser an diese Geliermittel gebunden. Nach dem Aufschlagen und Dosieren der Sahne in entsprechende Tortenformen, gelangen diese Torten in einen Härtetunnel zur Tiefkühlung. Bei der Tiefkühlung durchlaufen die Torten einen Luftstrom von etwa -45° C und geben an diesen Luftstrom ihre Wärme ab, so daß sie nach einer Kühlzeit von etwa zwei bis drei Stunden eine Kerntemperatur von -18° C erhalten. Bei diesem relativ langsamen Gefriervorgang friert das im Produkt befindliche Wasser zu größeren Eiskristallen aus. Bei dem Entstehen dieser Eiskristalle wird teilweise das Gerüst, welches vorher durch das Geliermittel gebildet worden ist, zerstört. Ebenso ist es möglich, daß während des Gefrierprozesses wachsende Eiskristalle die in kleinen Bläschen vorhandene Luft anstechen und somit die Membrane dieser Luftblasen zerstören. Dies ist kein wesentlicher Nachteil, solange das Produkt gefroren bleibt, d. h. das Wasser in fester Form im Produkt vorliegt. Beim Auftauen des Produktes verwandelt sich das feste Wasser der Eiskristalle in eine flüssige Wasserphase. Hierbei kommt es zur Konzentration von Wassertröpfchen. Das durch das Geliermittel aufgebaute Gerüst sowie die Emulsion von Luft, Fett und Serum können diese größeren als im Ausgangsprodukt vorhandenen Wasseransammlungen teilweise nicht mehr in das Produkt einschließen, es kommt zu einem Nässen des Produktes beim Auftauen.

Ebenso ist durch den relativ langsamen Gefrierprozeß ein Teil der Luftbläschen zerstört worden. Diese Schäden sind im Produkt irreparabel und führen beim Auftauen des Produktes zu einer Volumenverringerung.

Zwar läßt sich dieses Problem durch eine erhöhte Zugabe von Geliermitteln einigermaßen lösen, jedoch hat der verstärkte Einsatz von Geliermitteln eine geschmackliche Beeinflussung des Produktes zur Folge. Eine Vollmundigkeit der so hergestellten, tiefgefrorenen Schlagsahne ist nach dem Auftauen nicht mehr gegeben. Im Gegensatz zu anderen Lebensmitteln stellt das Tiefgefrieren von aufgeschlagener Sahne mit der zur Zeit vorhandenen Technologie keine Erhaltung der Qualität dar. Im Gegenteil, die Qualität wird durch das Tiefgefrieren noch verschlechtert.

### Herstellung von Speiseeis

Speiseeisrezepturen bestehen üblicherweise aus Milch, Magermilch, Rahm, Milchkonzentrat, Milchpulver oder Butter, auch Saccharose, Glukose bzw. Dextrose, aus Obsterzeugnissen, die zugesetzt werden können und aus Hydrokolloiden als Stabilisatoren (Pflanzliche Bindemittel, Alginate, Carrageenate, Johannisbrotkernmehl und ähnliches).

Zur Herstellung von Speiseeis werden die Einzelbestandteile entsprechend einer vorliegenden Rezeptur gewogen und in ein definiertes Mengenverhältnis gebracht. In einem Mischbehälter werden diese Einzelbestandteile miteinander vermengt. Nach einer fünfzehnminütigen Mischzeit bei 63° C ist diese Vermengung erreicht.

Danach folgt das Pasteurisieren auf 80° bis 85° C, und zwar für 20 bis 40 s lang.

Nach dieser Wärmebehandlung wird die Mischung abgekühlt auf etwa 70° C und danach in einer zweistufigen Homogenisierungsmaschine homogenisiert, und zwar in der ersten Stufe mit 150 und in der zweiten Stufe mit 40 bis 50 bar. Hierbei werden die Fettkügelchen auf unter 2 µ zerkleinert.

Diesem Homogenisierungsvorgang folgt ein Herunterkühlen der Mischung auf 2° bis 4° C. Danach wird diese Mischung in Tanks gebracht, um nach einer Reifezeit von 2 bis 24 h zur weiteren Verwendung zur Verfügung zu stehen. Diese Reifezeit bewirkt, daß die Hydrokolloide quellen, das Casein hydratisiert und die Viskosität erhöht wird, wobei sich das Gefüge des Speiseeises verfeinert. Gleichzeitig werden Schmelzwiderstand und Aufschlag verbessert, das Fett kristallisiert aus und ein ausgeglichenes Aroma bildet sich.

Nach Beendigung des Reifevorganges wird diese Mischung dem Kühl- oder Gefriergerät zum Gefrieren und zum gleichzeitigen Lufteinschlag (verschäumen) zugeführt.

Industriell werden heute die Mischungen für Speiseeis in kontinuierlich arbeitenden Kühl- oder Gefriergeräten (Freezer) teilweise gefroren. Dabei rotiert innerhalb eines verchromten Rohres eine Messerwelle aus Chrom-Nickel-Stahl mit einer Drehzahl von etwa 200 U/min. Die Messer schaben dabei einen dünnen, an der gekühlten Rohrinnenwand sich bildenden Eisfilm kontinuierlich ab und sorgen außerdem noch für eine innige Vermischung der in diesem Zylinder eingeführten Luft.

Zum Kühlen des Zylinders wird von außen in der Regel Frigen (eingetragenes Warenzeichen) oder Ammoniak in einem Temperaturbereich von -25° bis -30° C eingesetzt. Die gewünschten kleinen Eiskristalle erfordern schnelles Gefrieren, welches durch die stark unterkühlte Zylinderinnenwandung möglich ist.

Die Mischung tritt mit einer Temperatur von etwa 4° C in den Gefrierzylinder ein, nachdem ihr die für den Aufschlag erforderliche Luftmenge zudosiert worden ist. Bei einem üblichen Innendruck im Zylinder von etwa 3 bis 5 bar wird die Luft in die Mischung eingeschlagen. Gleichzeitig findet der Gefrierprozeß statt, und das Eis verläßt pastenförmig das Kühl- oder Gefriergerät.

Die mit diesem Verfahren zu erreichenden Temperaturen sind bis maximal -8° C möglich.

Das so hergestellte Eis wird in Bechern oder in Hörnchen abgefüllt. Diese Produkte müssen dann einem Nachgefrierprozeß unterzogen werden, um die Lagertemperatur von -20° C zu erreichen. Wird diese Nachkühlung nicht durchgeführt, so bilden sich die im Eis vorhandenen Wassereiskristalle größer aus, wodurch das Eis rauh und sandig schmeckt. Die zur Zeit auf dem Markt befindlichen Eiskrem-Kühl- oder Gefriergeräte lassen keine tieferen Temperaturen als -8° C zu.

Bei dem vorbeschriebenen Stand der Technik können Eiskrem-Schäume hergestellt und bis zu einem Bereich von -7° C gefroren werden. Diese Temperatur stellt jedoch keine Lagertemperatur dar. Vielmehr wird die Lagertemperatur von -20° C erst durch die Nachhärtung in Tiefkühltunneln erreicht. Zum Durchführen dieser Verfahrensweise sind hohe Investitionskosten, insbesondere für den Tiefkühltunnel, erforderlich. Außerdem sind die ständigen Energiekosten beträchtlich. Auf dem Gebiete der Schlagsahneherstellung sind Aufschlagverfahren vorbekannt, die ausschließlich im Temperaturplusbereich arbeiten. Hier ist ein Gefrieren von Schlagsahneschäumen vollkommen unbekannt.

Um diesem Mangel des vorbeschriebenen Standes der Technik abzuhelfen, haben die Anmelder das DE-C-39 18 268 erwirkt, aus dem eine Einrichtung gemaß der vorausgesetzten Gattung vorbekannt ist. Mittels einer solchen Einrichtung ist erstmalig eine Verfahrensweise möglich, bei welcher im gleichen Arbeitsgang eßbare Schäume, also nicht nur Eiskrem, sondern auch z. B. Schlagsahne, während und/oder im unmittelbaren Anschluß nach dem Aufschlagen im gleichen Arbeitsgang auf Lagertemperatur, also auf z. B. -20° C, zu kühlen. Dadurch kann z. B. das in Schlagsahne oder dergleichen befindliche Wasser durch extrem schnelles Herunterkühlen bei gleichzeitiger dynamischer Beanspruchung zu Eiskristallen unter 20 bis 30 µ gefroren werden. Bei einer Eiskristallgröße von 20 bis 30 µ ist die Gefahr, daß das Produkt nach dem Auftauen näßt, erheblich geringer. Ebenso ist die Luftverteilung in dem Produkt stabiler, da bei einer solchen Eiskristallgröße eine "Verletzung" der Luftblasen unwahrscheinlich ist.

Bei Anwendung eines solchen, schnellverlaufenden Gefrierprozesses kann die Vollmundigkeit der Schlagsahne erhalten bleiben, der Anteil an Geliermitteln kann verringert werden, wobei die Annäherung an ein frisch hergestelltes Produkt erheblich größer ist. Schließlich wird durch die nicht vorhandene Volumenreduzierung ein formstabiles Produkt erreicht, was z. B. für die Herstellung von Torten von großem Vorteil ist.

Durch die Kombination eines Aufschlag- und Gefrierverfahrens ist es somit erstmalig möglich, beispielsweise Schlagsahne kontinuierlich aufzuschlagen und gleichzeitig tiefzugefrieren. Ein Nachgefrieren von Sahneprodukten in einem Härtetunnel mittels Kaltluft bei etwa -45° C ist damit nicht mehr notwendig. Da bereits im Herstellungsprozeß die für Tiefkühlprodukte notwendige Mindesttemperatur von -18° C oder noch weniger erreicht wird, ist somit in jedem Fall ein anschließender Gefrierprozeß entbehrlich geworden.

Außerdem läßt sich bei Anwendung dieses Verfahrens eine Feinstverteilung von Wasserkristallen erreichen. Bei Anwendung des Verfahrens lassen sich somit Lebensmittelschäume auch auf anderer Basis als auf Schlagsahne herstellen und durch den Gefrierprozeß in eine haltbare Form bringen. Denkbar sind hier Fruchtschäume wie z. B. aufgeschlagenes Bananenpüree, und andere Milchprodukte, wie z. B. Fruchtjoghurte oder dergleichen.

Durch Anwendung des Verfahrens lassen sich vollkommen neue Lebensmittel in leichter, energie- bzw. brennwertarmer Art hervorbringen, die der modernen Ernährungsphysiologie angepaßt sind. Solche Systeme und Verfahrensweisen sind weltweit nicht bekannt. Hierdurch lassen sich vollkommen neue Absatzchancen eröffnen.

Auch bei der Herstellung von Eiskremmassen lassen sich diese bei Anwendung des Verfahrens so aufschlagen und gleichzeitig oder unmittelbar anschließend kontinuierlich gefrieren, daß sie keiner Nachhärtung mittels Kaltluft von -45° C mehr bedürfen, um die endgültige Lagertemperatur von z. B. -18° C bzw. -20° C zu erreichen. Durch dieses Verfahren entfällt der Arbeitsprozeß des Nachhärtens von Eiskrem vollständig, wodurch ein kontinuierlicher Prozeßablauf des Gefrierens und Abfüllens möglich wird, so daß die so hergestellten Produkte unmittelbar nach ihrer Abfüllung versandfertig sind.

Der Abkühlungsprozeß (Nachhärtung) auf -20° C mittels Kaltluft ist vom Anlagenbau - wie oben ausgeführt - an sich sehr investitionsintensiv, und es werden sehr große Abkühlzeiten benötigt, da das durchschnittliche Gefrieren eines Eisproduktes von 5° C auf -20° C nur 1 cm/h voranschreitet, wodurch z. B. ein 6 cm großer Eiswürfel mindestens eine Behandlungszeit mit Kaltluft von drei Stunden benötigt, um eine Kerntemperatur von -20° C zu erzielen. Neben diesen zeit- und anlagenintensiven, vorbekannten Verfahren tritt noch eine Schädigung des Produktes auf. Bei einer Temperatur von -5° bis -7° C ist nur 45 bis 63 % des vorhandenen Wassers ausgefroren. Die restlichen 40 %, abzüglich von ca. 5 % Wasser, verbleiben immer als sogenanntes "freies Wasser" im Produkt. Diese 35 % gefrieren erst im Nachhärtungsprozeß. Dabei lagert sich dieses Wasser an die schon vorhandenen Wasserkristalle an und bewirkt ein Vergrößern dieser Kristalle. Je größer die Wasserkristalle sind, desto weniger cremig schmeckt das Speiseeis. Durch die Nachhärtung und dem damit verbundenen Wachsen der Eiskristalle ist gleichzeitig auch noch eine Verschlechterung der Struktur des Speiseeises gegeben. Die Struktur verändert sich von cremig weich hin zu hart, eisig und bröckelig im extremen Fall.

Alle diese Nachteile werden bei Anwendung des Verfahrens vollkommen vermieden.

Obwohl es sich bei den Ausgangsmaterialien von vornehmlich Schlagsahne und Eiskrem um zwei eigenständige Lebensmittel handelt, läßt sich die grundsätzliche Problemstellung, nämlich Schäume durch Aufschlagen herzustellen und zu gefrieren bis zu einem Temperaturbereich, bei dem sie lagerfähig sind, bei dem erfindungsgemäßen Verfahren ohne Schwierigkeiten lösen.

Somit ist es bei Anwendung des Verfahrens erstmals möglich, gefrorene Schäume bis -18° bis -20° C in einem Arbeitsgang mit Beaufschlagen (Aufschlagen) herzustellen und kontinuierlich versandfertig abzuziehen.

Ein besonderer Vorteil besteht auch darin, daß die Energiekosten gegenüber mit Nachhärtetunneln arbeitenden Anlagen bei der Eiskremherstellung bei dem erfindungsgemäßen Verfahren um etwa z. B. 30 % oder noch niedriger liegen, so daß das Verfahren besonders wirtschaftlich arbeitet.

Der belüftete und gefrorene Schaum verläßt die Anlage kontinuierlich. Sämtliche Parameter zur Herstellung dieses Schaumes sind steuerbar, wie zum Beispiel Austrittstemperatur, Menge der eingebrachten (eingeschlagenen) Luft, Gefriergeschwindigkeit und so weiter. Durch die Steuerung hält sich die Einrichtung zum Durchführen des Verfahrens selbst in einem prozeßstabilen Zustand.

Bei der vorbekannten Einrichtung kann das zu verschäumende Produkt mit Luft von zum Beispiel 12° C aufgeschlagen werden. Das so verschäumte Produkt wird in einem Kühl- oder Gefriergerät auf zum Beispiel -5° C heruntergekühlt und dadurch der Schaum vorgefroren. Der so vorgefrorene Schaum wird in einer geeigneten Fördervorrichtung auf zum Beispiel -20° C weiter abgekühlt. Die Vorrichtungsteile können in einem Bauelement vereinigt sein. Ein Tiefgefriertunnel entfällt bei dieser Einrichtung vollkommen.

In der DE-C-39 18 268 ist auch eine Ausführungsform beschrieben, bei welcher das zu verschäumende Produkt in einer Vorrichtung aufgeschlagen wird, in der das verschäumte Produkt entweder gleichzeitig oder unmittelbar nach dem Verlassen der Schaumherstellungsvorrichtung in mindestens einer sich anschließenden Tiefkühlvorrichtung heruntergekühlt und durch eine Extruderschnecke ausgetragen und sofort weiterverarbeitet wird. Der aus dem Extruder austretende Schaum ist versandfertig und braucht nicht "nachgehärtet" zu werden. Es können auch mehrere Extrudervorrichtungen nach diesem Stand der Technik parallel und/oder hintereinander geschaltet werden. Zum Beispiel ist es möglich, mehrere Extruder im Co-Extrusionsprozeß arbeiten zu lassen. Das der Aufschlagvorrichtung zugeführte Produkt kann vorgekühlt werden. Es ist auch möglich, der Vorrichtung vorgekühlten Schaum zuzuführen und diesen Schaum auf die Lagertemperatur in der Extrudervorrichtung oder in einem oder mehreren der mit der Extrudervorrichtung verbundenen Vorrichtungsteile bis auf die Lagertemperatur herunterzukühlen.

Der Erfindung liegt die Aufgabe zugrunde, eine Einrichtung der im Oberbegriff des Patentanspruches 1 vorausgesetzten Art derart auszugestalten, daß das Produkt durch eine konstruktiv sinnvolle, relativ einfache Konstruktion auf Lagertemperatur kontinuierlich gekühlt und dabei homogen beansprucht und gut gemischt werden kann, bei möglichst homogener Wärmeabfuhr.

Diese Aufgabe wird durch die in **Patentanspruch 1** wiedergegebenen Merkmale gelöst.

Die erfindungsgemäße Einrichtung zum vorzugsweise lagerfertigen Tiefgefrieren von Eiskrem oder anderen Fluiden auf Temperaturen von geringer als -10° C unter gleichzeitiger Erzeugung eines cremigen Zustandes, realisiert einen weitestgehend homogenen mechanischen Energieeintrag aufgrund der Verwendung eines speziellen Doppelschneckensystems.

Die erfindungsgemäße Einrichtung weist folgende bedeutsame Merkmale auf:
a) Die Schnecken führen nur eine leichte gegenseitige Kämmung durch;
b) Der Schneckenkanal ist so ausgelegt, daß abhängig vom Fließverhalten der zu behandelnden Masse nahezu keine "Strömungstotzonen" entstehen, und damit ein homogener mechanischer Energieeintrag gewährleistet wird. Der lokale mechanische Energieeintrag legt die Größe der entstehenden Struktureinheiten - zum Beispiel Eiskristalle - und damit die Qualität des Produktes - zum Beispiel Cremigkeit - fest;
c) Die Wärmeabfuhr aus der Masse erfolgt möglichst homogen (Innen- und Außenkühlung).

Um die oben aufgeführten Merkmale a) bis c) zu gewährleisten, weist eine Einrichtung die Merkmale des Anspruches 1 auf.Bevorzugt weist eine Vorrichtung noch folgende Merkmale auf.
1. Die Schneckenkanäle des Doppelschnecken-Systems werden extrem flach ausgeführt, zum Beispiel H/W ∼ 0,1 - 0,2.
   Die Schneckensteigung ist ebenfalls gering. Der Steigungswinkel 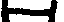 ist 20° bis 30°.
   Die genaue Wahl von H/W und 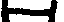 wird unter Berücksichtigung der Fließfunktion τ (γ̊) für das Produkt bei entsprechender Temperatur festgelegt. Hierbei ist von Wichtigkeit, daß die wirksame Mindestschubspannung an der Schneckenwelle sowie an der Außenzylinderwand die Fließgrenze τ₀ des Materials überschreitet.
   Hierbei ist zu berücksichtigen, daß ein Temperaturgradient über der Schneckenkanalhöhe existiert, d. h. die Materialfließgrenze eine Funktion des Kanalradius ist.
   Fließfunktion τ (γ̊, ϑ) bzw. Fließgrenze τ₀ (ϑ) werden in rheologischen Messungen ermittelt ( ϑ = Temperatur; γ̊ = Schergeschwindigkeit).
2. Das Doppelschneckensystem wird bevorzugt über ein an der Außenmanteloberfläche verdampfendes Fluid direkt sowie eventuell zusätzlich über eine Innenkühlung der Schnecken gekühlt. Am Außenmantel des Schneckenkanals wird ein direktes "Überflutungssystem" oder ein "Durchströmungsprinzip", zum Beispiel durch Kühlmittelbohrungen im Außenzylinder, realisiert. Die Innenkühlung erfolgt über die hohle Schneckenwelle.
3. Für die optimale Erzeugung eines cremigen Stoffsystems ist zum Beispiel bei Speiseeis, welches einen hohen dispergierten Luftanteil enthält, die Gashaltung während des mechanischen Tiefgefrierbehandlungsprozesses im Doppelschneckensystem zu gewährleisten. Hierzu kann - worauf weiter unten noch eingegangen wird - die Doppelschneckenwelle durch eine gasdichte Gleitringdichtung abgedichtet sein.

Neben den genannten konstruktiven Maßnahmen ist für die Erzeugung der gewünschten cremigen Struktur des tiefgefrorenen Stoffsystems auch die Berücksichtigung bestimmter "Betriebskriterien" notwendig.

Hierzu zählt insbesondere die richtige Dimensionierung des mechanischen Energieeintrages durch Wahl einer angepaßten Drehzahl (abhängig von der Schneckengeometrie). Die im Stoffsystem dissipierte, das heißt in Wärmeenergie umgewandelte mechanische Energie, darf ein kritisches Maß, welches durch die maximale mögliche Wärmeabfuhr konstruktiv sowie über das Kühlsystem festgelegt wird, nicht überschreiten.

Um dies zu gewährleisten, wird bei einer bevorzugten Einrichtung der Erfindung konsistenzabhängig (Endprodukt) die Drehzahl des Doppelwellensystems gesteuert, wobei gegebenenfalls auf die auf die Anmelderin zurückgehende Steuerung und Regelung der DE-C-39 18 268 zurückgegriffen werden kann.

Die Konsistenzmessung kann hierbei bevorzugt entweder über eine direkte Konsistenzmessung am Endprodukt (inline Viskositätsmeßzelle) oder indirekt über das Drehmoment an einer Schneckenwelle bzw. die Leistungsaufnahme des Antriebsmotors erfolgen.

### Zusammenfassend ist somit festzustellen:

Die Tiefgefrierstufe besteht bei der erfindungsgemäßen Einrichtung aus einem gleich- oder gegenläufig drehenden Doppelschneckensystem, welches eine homogene Durchmischung und mechanische Beanspruchung des zu verarbeitenden Produkts, zum Beispiel Speiseeis, gewährleistet. Diese ist zur Erzeugung möglichst feiner Strukturen mit kleinen Eiskristallen und damit gewünschter Cremigkeit bei gleichzeitig hohem ausgefrorenen H₂O-Anteil von entscheidender Wichtigkeit. Gleichzeitig wird die homogene Beanspruchung über die Wahl der Schneckenkanalgeometrie und die Schneckendrehzahl derart festgelegt, daß eine überkritische Beanspruchung der "Schaumstruktur" der belüfteten Eiskrem oder dergleichen mit der Folge der Strukturzerstörung (insbesondere Aufschlagverlust) vermieden wird.

Unter Berücksichtigung der strukturbedingten mechanischen Beanspruchungsgrenzen von Eiskrem oder dergleichen werden Schneckenkanalgeometrie (sowie Schneckenkämmung) und Schneckendrehzahl zusätzlich im Hinblick auf einen optimalen Wärmeübergang an das Kühlmedium unter Berücksichtigung der Energiedissipation durch Scherung der Eiskrem oder dergleichen ausgelegt.

Erfindungsgemäß wird der mechanische Energieeintrag in einen extrem flachen Schneckenkanal bei nur leichter Schneckenkämmung weitgehend homogen (keine örtlichen Spannungsspitzen) realisiert. Hierbei kann H/B ∼ 0,1 betragen, worin H = Kanalhöhe und B = Kanalbreite bedeuten. Man wird in der Regel eine Schneckensteigung 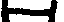 20° bis 30° wählen. Die Wahl der Schneckendrehzahl erfolgt rezepturspezifisch unter erfindungsgemäßer Berücksichtigung der temperaturabhängigen Fließgrenze τ₀ sowie kritischen Schubspannungen für die Strukturveränderung (Aufschlag-, Kremigkeitsverlust).

Wenn in den Anmeldungsunterlagen von einem "Doppelschneckensystem" oder "Doppelextruder" oder "Doppelschnecken" gesprochen wird, so schließt dies nicht aus, daß derartige "Systeme" auch mehr als zweimal, zum Beispiel vier-, sechs-, achtmal oder dergleichen vorgesehen sein können. Derartige "Doppelschneckensysteme" oder dergleichen können mehrfach parallel und/oder hintereinander in einem oder mehreren Gehäusen angeordnet sein.

In **Patentanspruch 2** ist eine besonders vorteilhafte Ausgestaltung der Schneckenkanäle beschrieben.

**Patentanspruch 3** beinhaltet eine Ausführungsform, bei welcher das Kühlfluid im "Durchströmungsprinzip" durch Kühlmittelbohrungen im Außenzylinder des Doppelschneckensystems strömt.

Demgegenüber beschreibt **Patentanspruch 4** eine Ausführungsform, bei welcher das zum Beispiel verdampfende Fluid als direktes "Überflutungssystem" Gehäusewandungen des Doppelschneckensystems umspült.

**Patentanspruch 5** beschreibt die zusätzliche Innenkühlung der Schnecken, welche unter Einsatz eines Heizmediums auch zum Auftauen verwendet werden kann (Versuchsende).

**Patentanspruch 6** beschreibt eine weitere vorteilhafte Ausführungsform der Erfindung.

Die optimierte Abstimmung von
- mechanischem Energieeintrag
- homogener Strukturbeanspruchung
- unterkritischer Scherung (Minimierung der Strukturzerstörung)
- Kühlgradient (Berücksichtigung von dissipierter Energie) und Gefrierprozeß
erfolgt mittels einer Steuerung von mechanischer und thermischer Energiebilanz auf Basis der Erfassung eines Temperaturprofils der Masse im Extruder sowie der Produktkonsistenz als Zielgröße. Die Produktkonsistenz wird mittels on-line oder in-line Viskositätsmessung ermittelt.

Gemäß **Patentanspruch 7** erfolgt die Wahl der Schneckendrehzahl rezepturspezifisch unter erfindungsgemäßer Berücksichtigung der temperaturabhängigen kritischen Schubbeanspruchungen für die Strukturveränderung (Aufschlag-, Cremigkeitsverlust). Bei zum Beispiel Eiskrem-Austrittstemperaturen von ca. -15° C werden beispielsweise erfindungsgemäß für Normaleiskrem (ca. 10 % Fettanteil) maximale Schergefälle von 30 bis 50 s⁻¹ realisiert. Neben der Vermeidung überkritischer Beanspruchung ist dabei die durch Scherung eingetragene (dissipierte) Energie über die erfindungsgemäße Wandkühlung mit direkt verdampfenden Kühlmittel zusätzlich zur Schmelzenthalpie der auszufrierenden wässrigen Phase aufzubringen.

In der Zeichnung ist die Erfindung beispielsweise veranschaulicht. Es zeigen:
- Fig. 1: in schematischer Darstellung einen Verfahrensgang gemäß der DE-C-39 18 268;
- Fig. 2: eine Einrichtung aus Figur 1, in größerem Maßstab, teils im Schnitt;
- Fig. 3: eine Konstruktion aus der DE-C-39 18 268;

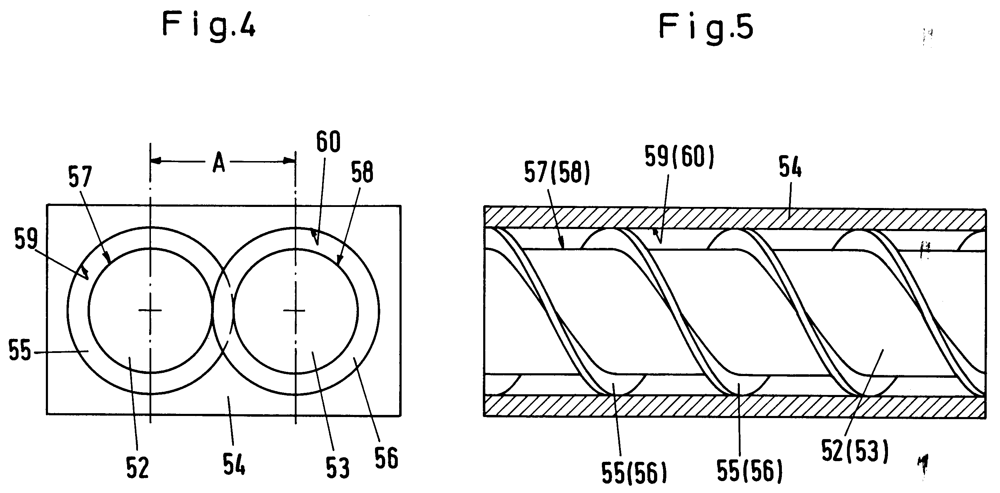

- Fig. 4: ein Doppelschneckensystem gemäß der Erfindung in teilweiser Stirnansicht;
- Fig. 5: einen Teillängsschnitt zu Figur 4;
- Fig. 6: ein Doppelschneckensystem, bei dem im Außenzylinder der Schnecken Kühlmittelkanäle zum Durchströmen eines Kühlfluids sowie eine Schneckeninnenkühlung vorgesehen sind, teils im Schnitt;
- Fig. 7: eine weitere Ausführungsform der Erfindung, wobei das Doppelschneckensystem über ein an der Außenmanteloberfläche des Gehäuses verdampfendes Fluid im "Überflutungssystem" gekühlt wird;
- Fig. 8: eine ausschnittsweise Darstellung aus einer Schnecke mit verschiedenen geometrischen (konstruktiven) Bezeichnungen und
- Fig. 9: einen Längsschnitt durch ein Doppelschneckensystem (nur eine Schnecke ersichtlich) mit Gasdichtung.

Mit dem Bezugszeichen 1 ist eine Aufschlagvorrichtung bezeichnet, in der das zu verschäumende Produkt unter Hinzumischung von z. B. Luft verschäumt wird. In der Aufschlagvorrichtung 1 kann der Schaum z. B. eine Temperatur von 12° C aufweisen.

Der so hergestellte Schaum verläßt die Aufschlagvorrichtung 1 in Pfeilrichtung und wird einem Kühl- oder Gefriergerät (Freezer) 2 zugeführt, in dem der Schaum auf z. B. -5,5° C heruntergekühlt wird. Der so vorgefrorene Schaum 10 verläßt das Kühl- oder Gefriergerät 2 in Pfeilrichtung und wird einer kombinierten Extrudervorrichtung 3 zugeführt. In der Extrudervorrichtung 3 wird der vorgefrorene eßbare Schaum auf z. B. -20° C lagerfertig heruntergekühlt und verläßt kontinuierlich die kombinierte Extrudervorrichtung 3 als lagerfertiges Produkt 4 (Schaum), z. B. Speiseeis, Schlagsahne.

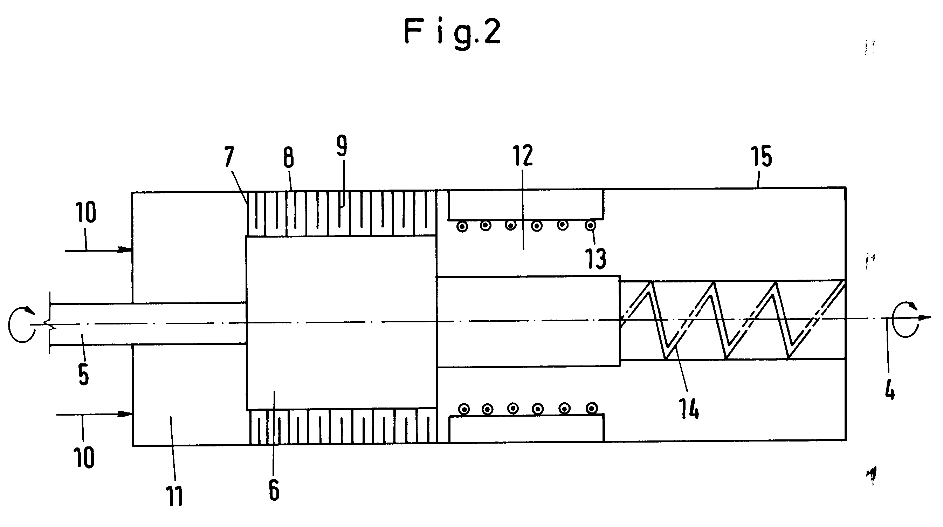

In Fig. 2 ist die kombinierte Extrudervorrichtung 3 schematisch im Querschnitt veranschaulicht. Das Bezugszeichen 5 bezeichnet eine von einem nicht dargestellten Motor angetriebene Welle, mit der ein Rotor 6 verbunden ist. Der Rotor 6 weist mehrere Schaufeln 7 auf, die mit Abstand mit an einem Stator 8 angeordneten Schaufeln 9 kämmen. Der vorgefrorene Schaum 10 wird einer Kammer 11 und damit auch den Schaufeln 7 und 9 zugeführt. In diesem Bereich können geeignete Kühlvorrichtungen angeordnet sein, die den vorgefrorenen Schaum 10 weiter herunterkühlen. Der weiterhin innig durchgemischte Schaum 10 wird in einer anschließenden Kühlvorrichtung 12 bis auf Lagertemperatur von z. B. -20° C kontinuierlich im Durchlaufverfahren heruntergekühlt. Kühlschlangen 13 sind in Fig. 2 schematisch angedeutet. Der lagerfertig gekühlte Schaum 4 wird durch eine oder mehrere Extruderschnecken 14 kontinuierlich aus der Vorrichtung 3 abgefördert. Die Extruderschnecke 14 ist an ihrem der Welle 5 entgegengesetzten Endabschnitt in einem lediglich schematisch angedeuteten rohrförmigen Gehäuse 15 gelagert und kann durch den gleichen Motor wie die Welle 5 mit angetrieben werden.

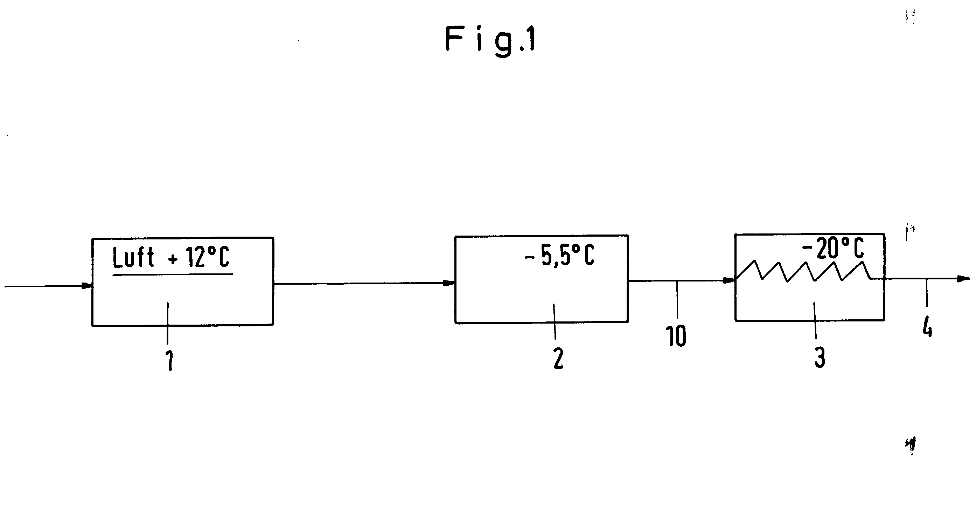

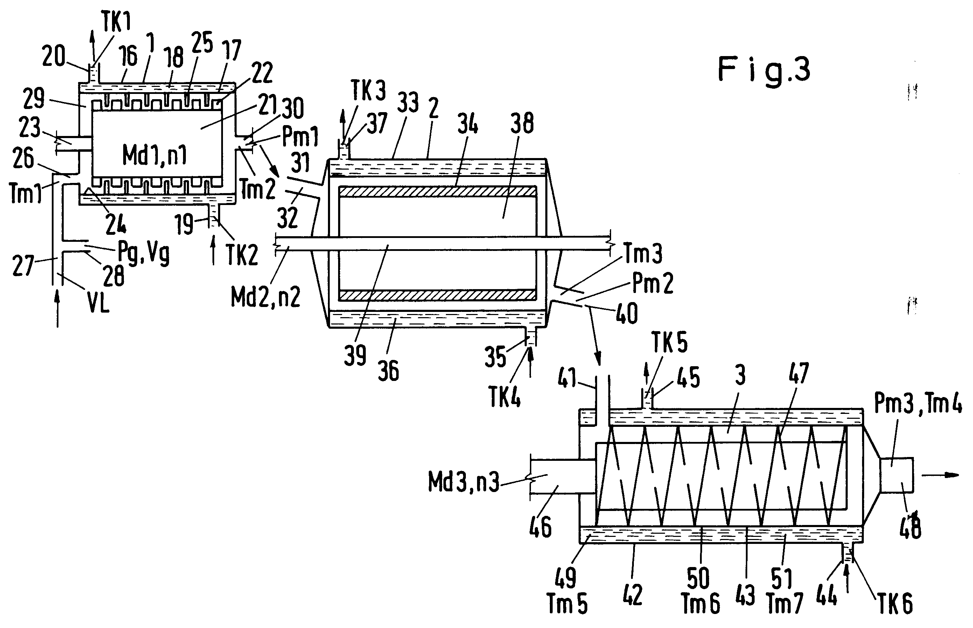

In Fig. 3 ist eine weitere Ausführungsform der Erfindung beschrieben, die eine detailliertere Ausarbeitung der aus Fig. 1 ersichtlichen Ausführungsform darstellt.

Mit dem Bezugszeichen 1 ist die Aufschlagstufe bzw. Aufschlagvorrichtung, mit 2 die Vorgefrierstufe bzw. das Kühl- oder Gefriergerät und mit 3 die Tiefgefrierstufe bzw. die kombinierte Extrudervorrichtung bezeichnet. Die Aufschlagvorrichtung 1 besteht im wesentlichen aus einem rohrförmigen Gehäuse 16, das im Innern ein weiteres rohrförmiges Gehäuse 17 aufweist, das zu dem äußeren Gehäuse 16 koaxial angeordnet ist, so daß zwischen äußerem und innerem Gehäuse 16 und 17 ein Ringraum 18 verbleibt, an dem an dem einen Ende eine Kühlmittelzufuhrleitung 19 und an dem anderen Ende ein Kühlmittelabflußstutzen 20 angeschlossen sind. Der Kühlmittelabflußstutzen 20 ist mit einer geeigneten, nicht dargestellten Leitung verbunden. Der Ringraum 18 wird somit von Kühlmittel durchströmt. Als Kühlmittel kann eine geeignete Sole, Frigen (eingetragenes Warenzeichen) oder dgl. in Betracht kommen.

In dem inneren rohrförmigen Gehäuse ist ein Rotor 21 mit zahlreichen über seinen Umfang und seiner Länge verteilten Schaufeln 22 angeordnet, der über eine Welle 23 durch einen nicht dargestellten Motor angetrieben wird.

An der Innenwandung 24 des inneren Gehäuses 17 sind über den Umfang und über die Länge ebenfalls zahlreiche Schaufeln 25 angeordnet, die mit den Schaufeln 22 mit Spaltabstand kämmen.

Auf der einen, der Welle 23 zugekehrten Stirnseite des Gehäuses 16 ist eine Zufuhrleitung 26 angeschlossen. An das eine Ende 27 dieses L-Stückes der Zufuhrleitung 26 wird das betreffende Fluid, also die Ausgangskomponenten des zu verschäumenden Mediums, zugeführt, während durch das Rohrstück 28 in die Zufuhrleitung 26 ein geeignetes Verschäumungsgas, in der Regel Luft, zugeführt wird. Fluid und Trägergas bzw. Luft treten also in den Innenraum 29 und werden durch die Schaufeln 22 und 25 innig miteinander verschäumt. Die in dieser Aufschlagvorrichtung 1 vorgeschäumten Stoffe verlassen über den Rohrstutzen 30 die Aufschlagvorrichtung 1 in Richtung des Pfeiles 31 und werden in einen Rohrstutzen 32 eingebracht, der an ein Gehäuse 33 des Kühl- oder Gefriergerätes 2 angeschlossen ist.

Beim Durchströmen der Aufschlagvorrichtung 1 werden Fluid und Trägergas vorgekühlt, wobei - wie in allen anderen Stufen, also Aufschlagvorrichtung 1, Kühl- oder Gefriergerät 2 und Tiefgefrierstufe 3 - Kühlmittel und Fluid sich im Gegenstrom zueinander bewegen.

In dem Kühl- oder Gefriergerät 2 strömt der Schaum durch einen Ringraum 34, der außen von Kühlmittel umspült ist, das über eine Zufuhrleitung 35 in einen Ringraum 36 eingegeben wird und diesen Ringraum 36 über eine Abflußleitung 37 wieder verläßt.

Koaxial zu den Ringräumen 34, 36 ist ein Rotor 38 angeordnet, der über eine Welle 39 motorisch angetrieben ist.

Der vorgefrorene Schaum wird über einen Stutzen 40 abgeführt und über einen Anschlußstutzen 41 einem Gehäuse 42 der Tiefgefrierstufe zugeführt.

Das Gehäuse 42 der Tiefgefrierstufe 3 weist wiederum einen Ringraum 43 auf, an den eine Leitung 44 zum Zuführen des Kühlmittels angeschlossen ist. Das Kühlmittel verläßt über eine Leitung 45 den Ringraum 43.

Koaxial zum Ringraum 43 ist z. B. eine über eine Welle 46 motorisch angetriebene Förderschnecke 47 angeordnet, die den tiefgefrorenen Schaum durch einen Stutzen 48 austrägt. Der tiefgefrorene Schaum wird dann in geeigneter Weise weiterverarbeitet, verpackt und abtransportiert.

Mit den Bezugszeichen 49, 50 und 51 sind Thermoelemente bezeichnet, mit denen die Temperatur des tiefgefrorenen Schaumes an verschiedenen Stellen in der Tiefgefrierstufe meßbar sind.

In Fig. 3 wurde mit V_{L} der Volumenstrom des zugeführten Fluids, mit V_{g} der Volumenstrom des zugeführten Trägergases, mit P_{g} der Druck des zugeführten Trägergases an dem Rohrstück 28, mit Tm₁ die Temperatur in der Zufuhrleitung 26, Md₁ das Drehmoment an der Welle 23, mit n₁ die Drehzahl der Welle 23, mit TK₁ die Temperatur im Kühlmittelabflußstutzen 20, mit Pm₁ der Druck im Rohrstutzen 30, mit Tm₂ die Temperatur im Rohrstutzen 30, mit TK₂ die Temperatur in der Kühlmittelzufuhrleitung 19, mit TK₃ die Temperatur in der Abflußleitung 37, mit Md₂ das Drehmoment an der Welle 39, mit n₂ die Drehzahl der Welle 39, mit TK₄ die Temperatur in der Zufuhrleitung 35, mit Pm₂ der Druck im Stutzen 40, mit Tm₃ die Temperatur im Stutzen 40, mit Md₃ das Drehmoment an der Welle 46, mit n₃ die Drehzahl der Welle 46, mit Tm₅, Tm₆ und Tm₇ die durch die Thermoelemente 49, 50 und 51 jeweils gemessenen Temperaturen der tiefgefrorenen Schäume in der Tiefkühlstufe, mit TK₆ die Temperatur in der Leitung 44, mit Pm₃ der Druck im Stutzen 48 und mit Tm₄ die Temperatur im Stutzen 48 bezeichnet.

Mit den Bezugszeichen 19, 20, 35, 37, 44 und 45 sind für die einzelnen Prozeßstufen die jeweiligen Kühlmittelzu- und -abflüsse gekennzeichnet. Die an den entsprechenden Stellen gemessenen Kühlmitteltemperaturen sind mit TK₁ bis TK₆ gezeichnet. Diese Temperaturen werden durch Thermoelemente an den entsprechenden Stellen gemessen.

Weitere Temperaturmessungen erfolgen beim jeweiligen Masseaustritt aus den einzelnen Prozeßstufen, Bezugszeichen 20, 40 bzw. 48, Temperaturen Tm₂, Tm₃, Tm₄. An denselben Stellen wird ferner eine Druck- bzw. Druckdifferenzmessung zur Konsistenzermittlung (viskoser Druckabfall) gemessen (Pm₁, Pm₂ bzw. Pm₃).

Für die Antriebsaggregate der einzelnen Prozeßstufen, Bezugszeichen 1 bis 3, erfolgt eine Leistungs- bzw. Drehmomentmessung Md₁ bis Md₃ und Drehzahlmessungen n₁ bis n₃.

Für die zudosierten Ausgangskomponenten (Fluid, Gas) wird sowohl der Volumenstrom V_{L} und V_{g} bei 27 und 28 sowie für das Gas der Dosierdruck P_{g} bei 28 und für die Mischung aus den Ausgangskomponenten bei Position 26 die Mischungstemperatur Tm₁ ermittelt.

In der letzten Prozeßstufe (Tiefgefrierstufe) wird zur Kontrolle des Temperaturprofils über die Länge der Prozeßstufe zusätzlich an drei Stellen die Massetemperatur der in dieser Prozeßstufe tiefzugefrierenden Masse bestimmt (Tm₅ bis Tm₇).

Zielgrößen beim Herstellungsprozeß tiefgefrorener Schaummassen sind die Massetemperatur Tm₄ am Austritt der Tiefgefrierstufe und der an dieser Stelle gemessene Druck bzw. Differenzdruck Pm₃ (viskoser Druckverlust), welche ein Maß für die Konsistenz der aus der Anlage austretenden tiefgefrorenen Schaummatrix sind. Zur Erreichung der definierten Zielgrößen sind folgende Vorgabeparameter nach den Erfahrungen der Rezepturentwicklung einzustellen und in ihrer Konstanz zu kontrollieren bzw. zu regeln: Fluid- und Gasvolumenstrom V_{L} und V_{g}, Gasdruck P_{g}, die Leistungsdaten der Antriebsaggregate Md₁ bis Md₃ und n₁ bis n₃ sowie die Eintrittstemperaturen des Kühlmediums in die einzelnen Prozeßstufen TK₂; TK₄; TK₆ und die Eintrittsgemischtemperatur Tm₁ bei 26 als auch der Gegendruck in der Aufschlagstufe Pm₁.

Als reine Kontrollparameter werden die Kühlmittelaustrittstemperaturen aus den einzelnen Prozeßstufen TK₁; TK₃; TK₅ sowie die Massetemperaturen Tm₂, Tm₃, Tm₄, Tm₅, Tm₆ und Tm₇ und der Austrittsdruck Pm₂ aus der Vorgefrierstufe ermittelt.

Die maßgeblichen Regelgrößen für den Schaumaufschlag sind die Volumenströme von Gas und Fluid V_{g}, V_{L}, maßgeblich für die Einstellung der Konsistenz - Zielgrößen Pm₃; Tm₄ - sind die Leistungseinträge in den einzelnen Prozeßstufen Md₁ bis Md₃; n₁ bis n₃ sowie die Geschwindigkeit des Kühlvorganges in der Tiefgefrierstufe, welche im wesentlichen durch die Eintrittstemperatur des Kühlfluids TK₆; Bezugszeichen 44 bestimmt wird.

Die Tiefgefrierstufe 3 ist bei einer erfindungsgemäßen Einrichtung mit mindestens einem Doppelschneckensystem (Doppelschneckenextruder) versehen, das zwei nur leicht miteinander kämmende Schnecken 52 und 53 aufweist. Die Schnecken 52 und 53 sind bei den dargestellten Ausführungsformen jeweils in einem Gehäuse 54 drehbar gelagert. Das Gehäuse kann aus einem metallischen Werkstoff, zum Beispiel aus Stahl, insbesondere einem hochlegierten, rostfreien Stahl, bestehen.

Die beiden Schnecken 52 und 53 werden durch einen nicht dargestellten Antrieb, zum Beispiel gemeinsam oder einzeln durch einen Motor, vorzugsweise über eine drehelastische Kupplung (nicht dargestellt) angetrieben. Erforderlichenfalls kann auch noch ein Untersetzungsgetriebe zwischengeschaltet sein (ebenfalls nicht dargestellt).

Wenn von "leichter Schneckenkämmung" die Rede ist, so ist damit gemeint, daß die Schneckenstege (Wendel) 55 bzw. 56 vorzugsweise nicht zu weit ineinandergreifen, also der Dreh-Achsabstand A der Schnecken 52 und 53 so gewählt wird, daß die Stege (Wendel) 55 und 56 in einem erhöhten Abstand von der Zylindermantelfläche 58 bzw. 57 der Schnecken 52 und 53 angeordnet sind.

Des weiteren ist die axiale Positionierung der beiden Schnecken 52 und 53 vorzugsweise derart bestimmt, daß die Wendel 55 der Schnecke 52 im mittleren axialen Bereich in die Wendel 56 der Schnecke 53 eintaucht. Dies trägt zur Vermeidung überkritischer Beanspruchungen der durch Scherung eingetragenen Energie bei.

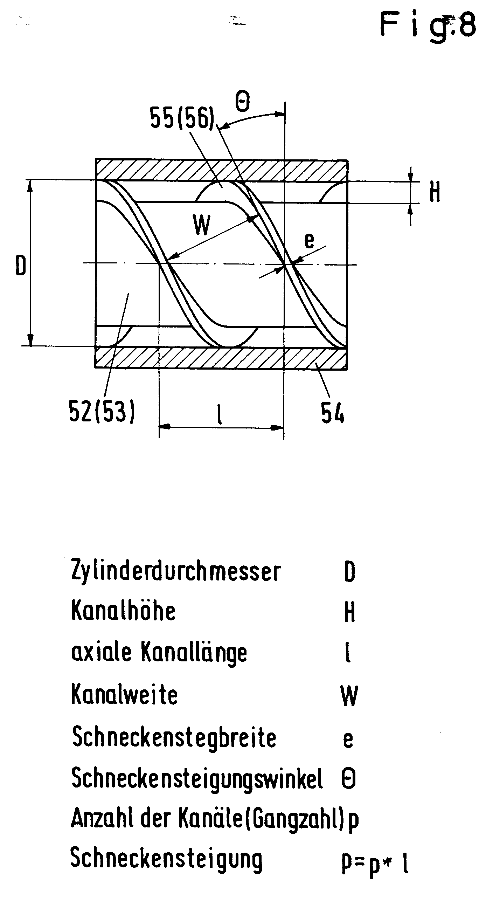

Der Schneckenkanal jeder Schnecke 52 und 53 ist extrem flach ausgebildet (H/W ∼ 0,1; Fig. 8.) Die Schneckensteigung 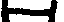 kann hierbei auch 20° bis 30° sein.

Die Wendel 55 und 56 schaben jeweils an der inneren Zylindermantelfläche 59 bzw. 60 und sind deshalb relativ scharfkantig ausgebildet.

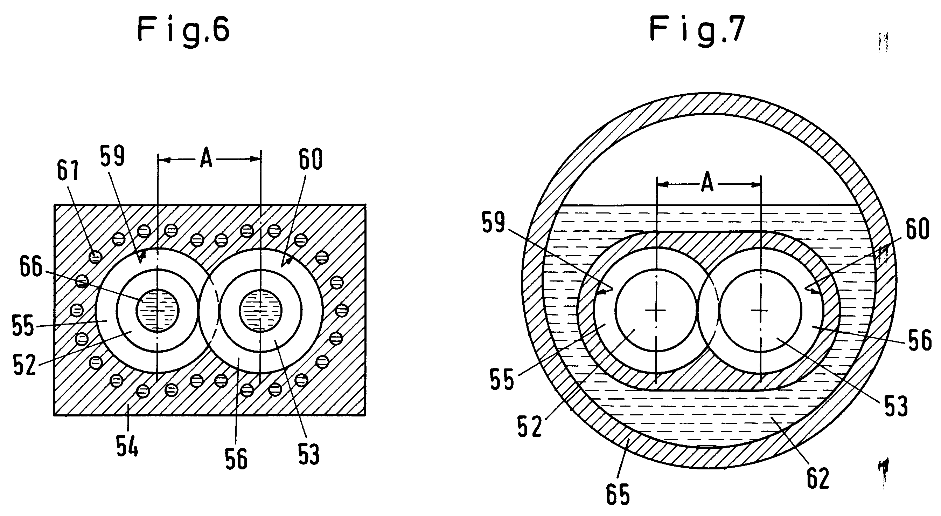

Bei der Ausführungsform nach Figur 6 sind in dem Gehäuse 54 zahlreiche parallel und mit Abstand zueinander angeordnete Kühlmittelkanäle 61 vorgesehen, durch die ein geeignetes Kühlfluid hindurchströmt, um den von den Schnecken 52 und 53 zu mischenden und zu fördernden aufgeschlagenen und vorgefrorenen Schaum (zum Beispiel Eiskrem) unter -10° C, vorzugsweise auf -16° C bis -45° C, vornehmlich auf -18° C bis -20° C, auf Lagertemperatur tiefzukühlen und wegzutransportieren. Eine Intensivierung der Kühlung sowie Verbesserung der Homogenität des Wärmeaustrages wird durch eine zusätzliche Innenkühlung der hohl ausgeführten Schneckenwellen 66 erreicht.

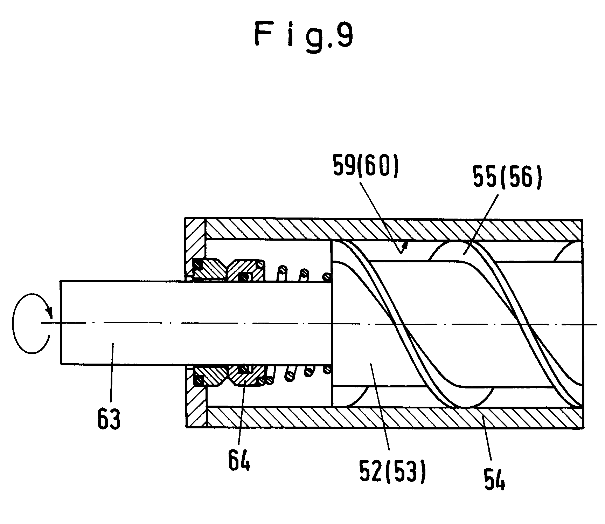

Ähnliches geschieht auch bei der Ausführungsform nach Figur 7, bei welcher das Gehäuse 54 im Querschnitt etwa flachoval, strenggenommen an den Enden nach Halbkreisbögen, die durch parallele und mit Abstand zueinander verlaufende Graden miteinander verbunden sind, ausgebildet ist. Das Gehäuse 54 ist in einem rohrförmigen, innen und außen zylindrischen Behälter 65 angeordnet, der teilweise mit einem Kühlfluid 62, zum Beispiel Frigen, Sole oder dergleichen gefüllt ist und das Gehäuse 54 umspült, um dadurch den von den Schnecken 52 und 53 zu mischenden Schaum, zum Beispiel Schlagsahne oder Eiskrem, auf Lagertemperatur abzukühlen. Da für die optimale Erzeugung eines cremigen Stoffsystems, zum Beispiel bei Speiseeis, ein hoher dispergierter Luftanteil erforderlich ist, muß die Gashaltung während des mechanischen Tiefgefrierbehandlungsprozesses im Doppelschneckensystem gewährleistet werden. Deshalb sind die aus dem Gehäuse 54 heraustretenden Wellenstümpfe jeweils durch eine gasdichte Gleitringdichtung 64 nach außen hin abgedichtet. Von den Wellenstümpfen ist lediglich der Wellenstumpf 63 in Figur 9 mit einem Bezugszeichen versehen. Der andere Wellenstumpf und die nicht ersichtliche gasdichte Gleitringdichtung ist ebenso ausgebildet wie die aus Figur 9 ersichtlichen konstruktiven Einzelheiten.

## Patentansprüche

1. Einrichtung zum Kühlen von eßbaren Schäumen, bei der einer Aufschlagvorrichtung (1) unmittelbar ein Kühl- und Gefriergerät (2) zum Vorgefrieren des Schaumes und dem Kühl- und Gefriergerät (2) unmittelbar eine als kombinierte Tiefgefrier- und Transportvorrichtung ausgebildete motorisch antreibbare Extrudervorrichtung (3) nachgeschaltet ist, in der der vorgefrorene Schaum auf Lagertemperatur herunterkühlbar ist, und die Aufschlagvorrichtung (1), das Kühl- oder Gefriergerät (2) und die Extrudervorrichtung (3) durch Rohrleitungen miteinander verbunden sind, **dadurch gekennzeichnet**, daß
a) die Extrudervorrichtung mindestens ein Doppelschneckensystem mit zwei mit ihren Drehachsen parallel zueinander angeordneten Schnecken (52, 53) aufweist;
b) die Schnecken (52, 53) des Doppelschneckensystems mit ihren Schneckenstegen (55, 56) an der inneren Zylindermantelfläche (59, 60) des sie umgebenden Gehäuses (54) schaben;
c) die Schneckenstege der zweiten Schnecke (53) mittig zwischen die Schneckenstege der ersten Schnecke (52) angeordnet sind und ein erhöhter Drehachsenabstand der Schnecken (52, 53) realisiert ist, so daß die der Zylindermantelfläche (57, 58) der jeweiligen Schnecke (52, 53) zugekehrte Stirnseite des Schneckensteges der anderen Schnecke (56, 55) einen radialen Abstand von dieser aufweist;
d) die Schneckenstege (55, 56) mit der Zylindermantelfläche (57, 58) der Schnecken (52, 53) und der inneren Zylindermantelfläche (59, 60) des Gehäuses (54) einen extrem flachen Schneckenkanal begrenzen.

2. Einrichtung nach Anspruch 1, **dadurch gekennzeichnet**, daß das Verhältnis von Kanalhöhe (H) zur Kanalweite (W) bei jeder Schnecke (52, 53) etwa 0,1 beträgt, während der Schneckensteigungswinkel ( 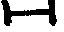 ) 20° bis 30° beträgt.

3. Einrichtung nach Anspruch 1 oder 2, **dadurch gekennzeichne**t, daß das Gehäuse (54) einstückig ist und im Bereich der inneren Zylindermantelfläche (59, 60) für die Schnecken (52, 53) mehrere achsparallel und mit Abstand zueinander angeordnete Kühlmittelkanäle (61) aufweist.

4. Einrichtung nach Anspruch 1 oder 2, **dadurch gekennzeichnet**, daß das Gehäuse (54) in einem Behälter (65) angeordnet ist, der so mit Kühlfluid füllbar ist, daß das Gehäuse (54) der beiden Schnecken (52, 53) außen 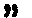 umspült" ist.

5. Einrichtung nach Anspruch 1 oder 2, **dadurch gekennzeichnet**, daß die Schneckenwellen (66) hohl ausgeführt sind.

6. Einrichtung nach Anspruch 1 oder einem der folgenden, **dadurch gekennzeichnet**, daß jeder Wellenstumpf (63) für die Schnecken (52, 53) durch eine gasdichte, insbesondere als Gleitringdichtung ausgebildete Dichtung (64) nach außen hin abgedichtet ist.

7. Einrichtung gemäß Anspruch 1 oder einem der folgenden, **dadurch gekennzeichnet**, daß sie eine Steuerung aufweist, welche die Drehzahl der Schnecken (52, 53) rezepturspezifisch unter Berücksichtigung der temperaturabhängigen kritischen Schubspannungen für die Strukturveränderungen zur optimierten Abstimmung von mechanischem Energieeintrag, homogener Strukturbeanspruchung des jeweiligen Produktes, überkritischer Scherung, Kühlgradient und Gefrierprozeß durch Erfassung der Produktkonsistenz als Zielgröße vornimmt, wobei die Produktkonsistenz mittels einer on-line-Viskositätsmessung bestimmt wird, derart, daß im Stoffsystem dissipierte, das heißt in Wärmeenergie umgewandelte mechanische Energie ein kritisches Maß nicht überschreitet.

## Claims

1. Cooling apparatus for fluid and eatable foams, where directly downstream of a beating device (1) is arranged a refrigerating and freezing unit (2) for pre-freezing the foam and directly downstream of the refrigerating and freezing unit (2) is arranged an extruder (3) suitable for motor-drive, taking the form of a combined deep-freezing and conveyor device, in which the pre-frozen foam can be cooled down to storage temperature, and the beating device (1), the refrigerating or freezing unit (2) and the extruder (3) are connected to one another by means of pipes, **characterized by the fact that**
a) the extruder incorporates at least one twin-screw system with two screws (52, 53) whose axes of rotation are arranged parallel to one another;
b) the flight lands (55, 56) of the screws (52, 53) of the twin-screw system scrape on the inner cylinder circumference (59, 60) of the casing (54) surrounding them;
c) the flight lands of the second screw (53) are arranged centrally between the flight lands of the first screw (52) and an increased axis of rotation interval between the screws (52, 53) is implemented such that end face of the flight land of the other screw (55, 56) facing the cylindrical circumference (57, 58) of the screw in question (52, 53) is at a radial distance from it;
d) the flight lands (55, 56) with the cylindrical circumference (57, 58) of the screws (52, 53) and the inner cylindrical circumference (59, 60) of the casing (54) delimit an extremely flat screw channel.

2. Apparatus in accordance with Claim 1, **characterized by the fact that** the ratio of channel height (H) to the channel width (W) in the case of each screw (52, 53) is approximately 0.1, whilst the screw helix angle (|--|) is 20 ° to 30 °.

3. Apparatus in accordance with Claim 1 or 2, **characterized by the fact that** the casing (54) consists of a single piece and in the region of the inner cylindrical circumference (59, 60), it incorporates several axially parallel coolant channels (61) arranged at a distance from one another.

4. Apparatus in accordance with Claim 1 or 2, **characterized by the fact that** the casing (54) is arranged in a container (65) which can be filled with cooling fluid such that it "washes around" the casing (54) of the two screws (52, 53).

5. Apparatus in accordance with Claim 1 or 2, **characterized by the fact that** the screw shafts (66) are of hollow design.

6. Apparatus in accordance with Claim 1 or one of the subsequent Claims, **characterized by the fact that** each shaft end (63) for the screws (52, 53) is sealed off from the outside by a gas-tight seal (64), in particular in the form of a mechanical seal.

7. Apparatus in accordance with Claim 1 or one of the subsequent Claims, **characterized by the fact that** it incorporates a control which regulates the speed of rotation of the screws (52, 53) in a manner specific to the recipe, taking account of the temperature-dependent critical shear stresses for the structural changes for optimized matching of mechanical energy input, homogeneous structural stressing of the product involved, supercritical shearing action, cooling gradient and freezing process by acquisition of the product consistency as target variable, where the product consistency is determined by on-line viscosity measurement such that mechanical energy dissipated in the material system, that is to say converted into thermal energy, does not exceed a critical level.

## Revendications

1. Dispositif de refroidissement pour mousses fluides et comestibles dans lequel un appareil réfrigérateur et congélateur (2) servant à précongeler la mousse est installé directement en aval d'un dispositif de montée en mousse (1), et dans lequel un dispositif extrudeur (3) servant de dispositif combiné de surgélation et transport entraînable par moteur est installé en aval de l'appareil réfrigérateur et congélateur (2), et dans lequel (3) la mousse précongelée est refroidissable à la température de stockage, et dans lequel le dispositif de montée en mousse (1), l'appareil réfrigérateur et congélateur (2) et le dispositif extrudeur (3) sont reliés entre eux par des conduites,
**caractérisé en ce que**
a) Le dispositif extrudeur présente au moins un dispositif à double vis sans fin, les deux vis (52, 53) ayant des axes rotatifs disposés parallèlement l'un à l'autre;
b) Les vis (52, 53) du système à double vis sans fin râclent par leurs nervures hélicoïdales (55, 56) contre la surface cylindrique intérieure (59, 60) du carter (54) qui les enferme;
c) Les nervures hélicoïdales de la deuxième vis sans fin (53) sont centrées entre les nervures hélicoïdales de la première vis (52), et en ce que l'on a prévu un écart accru entre les axes des vis sans fin (52, 53) de sorte que la face frontale de la nervure hélicoïdale d'une vis sans fin (56, 55) regardant la surface cylindrique (57, 58) de l'autre vis (52, 53) présente un écart radial par rapport à celle-ci;
d) Les nervures hélicoïdales (55, 56) délimitent avec la surface cylindrique (57, 58) des vis (52, 53) et la surface cylindrique intérieure (59, 60) du carter (54) un canal extrêmement étroit.

2. Dispositif selon la revendication 1, **caractérisé en ce que** le rapport entre la hauteur (H) et la largeur (W) du canal s'élève à environ 0,1 pour chaque vis sans fin (52, 53), tandis que l'angle du pas de vis ( i-i) est compris entre 20° et 30°.

3. Dispositif selon la revendication 1 ou 2, **caractérisé en ce que** le carter (54) est monobloc et qu'il présente, dans la zone de la surface cylindrique intérieure (59, 60), pour les vis sans fin (52, 53), plusieurs canalisations à produit réfrigérant (61) à axes parallèles et disposées distantes les unes des autres.

4. Dispositif selon la revendication 1 ou 2, **caractérisé en ce que** le carter (54) est installé dans un réservoir (65) remplissable avec du fluide réfrigérant de telle sorte que les parois extérieures du carter (54) des deux vis (52, 53) baignent dans le fluide.

5. Dispositif selon la revendication 1 ou 2, **caractérisé en ce que** les arbres (66) des vis sans fin sont creux.

6. Dispositif selon la revendication 1 ou l'une des revendications suivantes, **caractérisé en ce que** chaque bout d'arbre (63) des vis sans fin (52, 53) est étanché par rapport à l'extérieur par un joint (64) étanche au gaz, notamment conformé en garniture mécanique d'étanchéité.

7. Dispositif selon la revendication 1 ou l'une des revendications suivantes, **caractérisé en ce qu'**il présente une commande prenant la vitesse des vis sans fin (52, 53) comme grandeur-cible, selon chaque recette spécifique, en tenant compte des tensions propulsives dépendantes de la température et critiques pour les modifications de structure, permettant ainsi une harmonisation optimale de l'apport d'énergie mécanique, en tenant compte d'une contrainte structurelle homogène dans tout le produit concerné, du cisaillement surcritique, du gradient de refroidissement et du processus de congélation par saisie de la consistance du produit, laquelle est saisie au moyen d'un dispositif viscosimétrique en ligne de sorte que l'énergie dissipée dans la matière, c'est-à-dire l'énergie mécanique convertie en énergie thermique, ne dépasse pas un niveau critique.
